(19) Europäisches Patentamt
European Patent Office
Office européen des brevets

(11) **EP 3 173 438 A1**

(12) # EUROPEAN PATENT APPLICATION

(43) Date of publication:
**31.05.2017 Bulletin 2017/22**

(51) Int Cl.:
**C08K 3/34** *(2006.01)*     **C08L 23/12** *(2006.01)*
**A47J 31/44** *(2006.01)*

(21) Application number: **15196995.3**

(22) Date of filing: **30.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **SABIC Global Technologies B.V.**
**4612 PX  Bergen op Zoom (NL)**

(72) Inventor: **van Beek, Dimphna Johanna Maria**
**6160 GA Geleen (NL)**

(74) Representative: **Renkema, Jaap et al**
**IPecunia Patents B.V.**
**P.O. Box 593**
**6160 AN Geleen (NL)**

(54) **USE OF POLYPROPYLENE COMPOSITION FOR COFFEE CARTRIDGE**

(57)    The present invention relates to the use of a polypropylene composition comprising
- from 60 - 90 wt.% of polypropylene
- from 10 - 40 wt.% of talc
- from 0 - 5 wt.% of optional additives

wherein the wt.% is based on the weight of the composition and the total of polypropylene, talc and optional additives is 100 wt.%, for the manufacture of a cartridge for making a beverage.

Figure 1

**Description**

The present invention relates to the use of a thermoplastic composition for the manufacture of a cartridge for making a beverage.

Cartridges for making a beverage, in particular coffee, are well established and exist in several configurations. In particular for coffee, the configuration and the choice of materials is of high importance. On the one hand the beverage quality needs to be of the appropriate level which translates in particular to oxygen permeability of the cartridge as a whole. On the other hand the configuration must be such that the beverage raw material, such as for example ground coffee, can be accessed and processed relatively easily within the device for making the beverage. This translates to certain design and mechanical properties constraints. Overall the cost of manufacturing of the cartridges, which depends on both the type of materials as well as the construction of the cartridge should be kept as low as possible. Further to the foregoing a common property of the existing cartridges is that these are intended for single use. Thus, after the preparation of the beverage using a dedicated device accommodating the cartridge, the cartridge is disposed of resulting in a significant waste stream. The more complex the cartridge configuration in terms of the variety of employed materials, the more difficult it will be to recycle the cartridges. For example, current cartridges often include aluminium layers requiring a step of separating the thermoplastic material from said aluminium prior to recycling of the thermoplastic material.

Thus there is a continuous need for materials that exhibit the desired properties at a relatively low cost. There is also a continuous need for cartridge configurations that are easier to manufacture and further for cartridges that can be recycled in a more cost effective manner.

It is therefore an object of the present invention to address at least in part one or more of the foregoing needs.

Thus, in a first aspect the present invention is directed at the use of a polypropylene composition comprising

- from 60 - 90 wt.% of polypropylene,
- from 10 - 40 wt.% of mineral filler, in particular 10 - 40 wt.% of talc
- from 0 - 5 wt.% of optional additives,

wherein the wt.% is based on the weight of the composition and the total of polypropylene, mineral filler and optional additives is 100 wt.%, for the manufacture of a cartridge for making a beverage.

Polypropylene is a relatively low cost material which is relatively easy to recycle. A disadvantage of polypropylene however is that, in particular compared to for example polyesters and polyamides, polypropylene has a poor oxygen permeability, i.e. an oxygen permeability that is too high to guarantee, over a longer period of time, a good quality of beverage. This is in particular of relevance for cartridges containing ground coffee where it is believed that prolonged contact with oxygen is disadvantageous for the taste of the coffee. Other properties of the coffee such as the appearance of a foam layer may also be adversely affected.

The present inventors have found however that polypropylene compositions containing a mineral filler, in particular talc, may be used as suitable materials for the manufacture of beverage cartridges. The present inventors further found that the mechanical properties of these materials can be tuned to suit the requirements for successful use in existing beverage making equipment, in particular existing coffee machines. The present inventors have further found that it is possible to design the cartridges such that only a very minimal amount of non polypropylene materials need to be used, so that after the use the cartridges can be recycled relatively easily without complex material separation steps.

Accordingly the object of the invention is met.

In all aspects of the present invention disclosed herein it is preferred that the polypropylene is a propylene homopolymer or a random copolymer of propylene and at most 5 wt.% of ethylene and/or alpha olefin having 4 to 10 carbon atoms based on the weight of the random copolymer. The present inventors believe that a higher crystallinity of the polypropylene results in improved (i.e. reduced) oxygen permeability. Accordingly it is further preferred that the 60 - 90 wt.% of polypropylene is a propylene homopolymer. The term random indicates that the comonomer(s) of the random copolymer are randomly distributed within the copolymer. The term random is further understood according to IUPAC (Glossary of basic terms in polymer science; IUPAC recommendations 1996).

The melt flow rate of the polypropylene is preferably from 10 - 60 g/10min (ISO 1133, 2.16 kg at 230°C), preferably from 20 - 60 g/10min or 25 - 45 g/10min.

In order to decrease the oxygen permeability of the material it is essential that the composition also comprises from 10 - 40 wt.%, on the basis of the weight of the composition, of mineral filler. The mineral filler, in particular talc, acts as a barrier for oxygen permeating the material. Accordingly it is preferred that the mineral filler comprises at least 90 wt.%, preferably at least 95, more preferably at least 99 wt.% of talc on the basis of the weight of the mineral filler. Most preferably the mineral filler is talc.

The talc is further preferably a high aspect ratio talc, meaning a talc having a lamellarity index (LI) of more than 2.90, the lamellarity index defined as:

$$LI = \frac{d50(L) - d50(S)}{d50(S)}$$

Wherein d50(L) is the median particle size d50 [mass percent] determined by laser diffraction technique in accordance with ISO 13320-1 and d50(S) is the median particle size d50 [mass percent] as determined by sedimentation technique in accordance with ISO 13317-3. The LI is preferably at least 3.10, more preferably at least 3.50 such as from 3.50 to 9.00 or 4.10 to 7.00. The LI is determined on the basis of the talc prior to being compounded with the other components of the polypropylene composition.

Mixtures of more than one type of talc and/or mixtures of more than one type of mineral filler may also be used. A preferred amount of mineral filler, in particular talc, is from 15 - 30 wt.%. An even more preferred amount is from 20 - 25 wt.%.

The composition may further comprise up to 5wt.%, on the basis of the weight of the composition, of optional additives. Such additives are common in the art and are generally one or more of additives selected from pigments, dyes, anti-oxidants, mould release agents, UV stabilisers, anti-scratch additives, impact modifiers, anti-static agents, smell scavengers, alpha nucleating agents, beta nucleating agents, with the proviso that such optional additives are approved for food packaging applications.

In the composition the total of polypropylene, mineral filler and optional additives is 100 wt.%. If the mineral filler is talc then the total of polypropylene, talc and optional additives is 100 wt.%.

For the avoidance of doubt it is to be understood that the polypropylene composition in the use according to the invention is a thermoplastic composition.

It is preferred that the melt flow rate of the polypropylene composition is from 15 to 60 more preferably from 25 to 45 g/10min determined in accordance with ISO 1133 (2.16 kg, 230 °C).

It is further preferred that the polypropylene composition has a flexural modulus from 1500 - 3500 MPa determined in accordance with ISO 178.

It is further preferred that the polypropylene composition has an Izod notched impact strength of from 2 - 7 kJ/m$^2$ determined in accordance with ISO 180/1 A.

The polypropylene composition has an oxygen gas transmission rate permeability as determined in accordance with ASTM D3985 (23 °C and 0% RH) of at most 60, preferably at most 50, more preferably at most 40 cc.mm/m$^2$.day.

The beverage to be prepared from the cartridge containing the beverage raw material is typically a beverage that is consumed when hot. Thus the beverage may be coffee, tea, hot chocolate (milk) or instant soup. Preferably however the beverage is coffee or thee, with coffee being most preferred. To that extent the cartridge may contain either a liquid coffee concentrate, ground coffee or instant coffee, ground coffee being preferred.

The invention according to the first aspect as disclosed herein is directed to the use of a polypropylene composition. The first aspect of the present invention is however also directed at a method for the manufacture of a cartridge for making a beverage wherein the cartridge comprises or substantially consists of the polypropylene composition disclosed herein. Preferred embodiments of the use are also preferred embodiments for such a method.

Thus the present invention is also directed at a method for the manufacture of a cartridge for making a beverage comprising molding of a polypropylene composition comprising

- from 60 - 90 wt.% of polypropylene
- from 10 - 40 wt.% of mineral filler, in particular 10 - 40 wt.% of talc
- from 0 - 5 wt.% of optional additives,

wherein the wt.% is based on the weight of the composition and the total of polypropylene, mineral filler and optional additives is 100 wt.%.

In the method it is preferred that the polypropylene is a propylene homopolymer or a random copolymer of propylene and at most 5 wt.% of ethylene and/or alpha olefin having 4 to 10 carbon atoms based on the weight of the random copolymer. Propylene hompolymers being most preferred.

In the method the mineral filler preferably comprises at least 90 wt.%, preferably at least 95, more preferably at least 99 wt.% of talc on the basis of the weight of the mineral filler.

In the method the polypropylene composition preferably has one or more of the following properties:

- melt flow rate of from 15 to 60 more preferably from 25 to 45 g/10min determined in accordance with ISO 1133 (2.16 kg, 230°C)
- Flexural modulus of from 1500 to 3500 MPa determined in accordance with ISO 178
- Izod notched impact strength of from 2 - 7 kJ/m2 determined in accordance with ISO 180/1A)

In the method the polypropylene composition preferably comprises from 70 - 90 wt.% polypropylene and from 10 - 30 wt.% of mineral filler; in particular the polypropylene composition preferably comprises from 70 - 90 wt.% polypropylene and from 10 - 30 wt.% of talc.

In the method the polypropylene composition preferably has an oxygen gas transmission rate permeability as determined in accordance with ASTM D3985 (23°C and 0%RH) of at most 60 preferably at most 50, more preferably at most 40 cc.mm/m$^2$.day.

In the method the beverage is preferably coffee.

In another aspect the present invention relates to a cartridge for making a beverage, comprising

- a top portion comprising a weakened section for allowing a needle to puncture said top portion allowing injection of a fluid into said cartridge
- a hollow body portion extending from said top portion to a bottom portion and containing a beverage raw material configured for producing the beverage upon contact with said fluid
- a filter layer positioned in the hollow body part between said beverage raw material and said bottom portion
- a bottom portion configured to allow the beverage to pass through
- a sealing film covering said bottom portion,

wherein said top portion, said hollow body portion part and said bottom portion are made from a polypropylene composition comprising

- from 60 - 90 wt.% of polypropylene
- from 10 - 40 wt.% of mineral filler, in particular 10 - 40 wt.% of talc
- from 0 - 5 wt.% of optional additives
  wherein the wt.% is based on the weight of the composition and the total of polypropylene, mineral filler and optional additives is 100 wt.%,
  said filter layer is preferably made from polypropylene non-woven material, said sealing film is a multilayer sealing film comprising at least one polyolefin layer.

Or in a second aspect the present invention relates to a cartridge for making a beverage that, not taking into account the beverage raw material, essentially consists of thermoplastic material. The cartridge does not contain any metal foil such as e.g. aluminium. In particular the multilayer sealing film is a multilayer thermoplastic film not containing a metal, e.g. aluminium film.

The polypropylene is preferably a propylene homopolymer or a random copolymer of propylene and at most 5 wt.% of ethylene and/or alpha olefin having 4 to 10 carbon atoms based on the weight of the random copolymer. A propylene homopolymer is most preferred,

Preferably the content of polypropylene composition in the cartridge, on the basis of the weight of the cartridge is at least 90.0, more preferably at least 95.0, even more preferably at least 99.0 wt.%. Most preferred is a polypropylene content of at least 99.5 wt.%.

The materials not being polypropylene are usually layers of the multilayer sealing film, which may for example be polyethylene and ethylene vinyl alcohol polymer.

The advantage of having a full thermoplastic cartridge with a high polypropylene composition content is that recycling is relatively easy and essentially only requires cleaning of the used cartridges from beverage raw material remains.

The non-woven material of the filter layer is preferably a polypropylene non-woven material. The non-woven material is a thermoplastic material.

Preferably the multilayer sealing film has a thickness of from 20 - 200 μm, preferably from 20 - 150 more preferably from 20 - 50 μm.

The multilayer sealing film further preferably comprises a barrier layer selected from an ethylene vinyl alcohol copolymer layer, a polyvinylidene chloride layer, a polyethylene terephthalate layer, a polyamide layer and a polyvinyl alcohol layer, said barrier layer preferably having a thickness of from 2 - 20 μm, preferably from 2 - 10μm, more preferably from 2 - 5μm.

The cartridge preferably has, for each of its respective parts an oxygen gas transmission rate permeability as determined in accordance with ASTM D3985 (23°C and 0%RH) of at most 60, preferably at most 50, more preferably at most 40 cc.mm/m$^2$.day. The lower the permeability rate the thinner the walls of the cartridge can be, allowing a lower cost of manufacture.

In line with the first aspect of the present invention the polypropylene composition has one or more of the following properties:

- melt flow rate of from 15 to 60 more preferably from 25 to 45 g/10min determined in accordance with ISO 1133 (2.16 kg, 230°C)
- Flexural modulus of from 1500 to 3500 MPa determined in accordance with ISO 178
- Izod notched impact strength of from 2 - 7 kJ/m2 determined in accordance with ISO 180/1A)

In an embodiment the cartridge further comprises a second filter layer positioned between said beverage raw material and said top portion, said second filter layer preferably made from polypropylene non-woven material. The second filter layer prevents particulate raw material from escaping out of the cartridge.

The preparation of the cartridge containing the beverage raw material is essentially a step of assembling the parts of the cartridge and filling the same with the beverage raw material.

Thus, the present invention in its second aspect also relates to a kit of parts for the manufacture of a cartridge according to the invention, the kit comprising

a hollow body portion for containing a beverage raw material, said hollow body portion extending from a bottom portion configured to allow beverage to pass through, and a top portion configured for connecting with the hollow body portion opposite the bottom portion, said top portion comprising a weakened section for allowing a needle to puncture said top portion at said weakened section for allowing injection of a fluid into said cartridge,

or

a hollow body portion for containing a beverage raw material, said hollow body portion extending from a top portion comprising a weakened section for allowing a needle to puncture said top portion at said weakened section allowing injection of a fluid into said cartridge, and a bottom portion configured for connecting with the hollow body portion opposite the top portion, said bottom portion configured to allow beverage to pass through,

and

a filter layer of a filter material configured to be positioned between the beverage raw material and the bottom portion in the cartridge,

wherein said hollow body portion, said top portion and said bottom portion are made from a polypropylene composition comprising

- from 60 - 90 wt.% of polypropylene
- from 10 - 40 wt.% of mineral filler, in particular 10-40 wt.% of talc
- from 0 - 5 wt.% of optional additives
  wherein the wt.% is based on the weight of the composition and the total of polypropylene, mineral filler and optional additives is 100 wt.%.

As is evident from the kit of parts the method for the manufacture may have at least two embodiments. Thus, a first method for the manufacture of a cartridge according to the second aspect comprises the steps of:

i) providing a hollow body portion for containing a beverage raw material for producing a beverage upon contact with a fluid, said hollow body portion extending from a bottom portion configured to allow the beverage to pass through,
ii) providing a filter layer in the hollow body portion,
iii) filling the hollow body portion at least in part with beverage raw material, said beverage raw material being in contact with the filter layer,
iv) connecting in a sealable manner a top portion with the hollow body portion opposite the bottom portion, said top portion comprising a weakened section for allowing a needle to puncture said top portion at said weakened section allowing injection of a fluid into said cartridge,
v) connecting a multilayer sealing film in a sealable manner to the bottom portion of the cartridge.

A second method for the manufacture of a cartridge according to the second aspect comprises the steps of:

i) providing a hollow body portion for containing a beverage raw material configured for producing a beverage upon contact with a fluid, said hollow body portion extending from a top portion comprising a weakened section allowing a needle to puncture said top portion at said weakened section allowing injection of a fluid into said cartridge
ii) filling the hollow body portion at least in part with beverage raw material,
iii) providing a filter layer in the hollow body portion said filter layer being in contact with said beverage raw material,
iv) connecting in a sealable manner a bottom portion with the hollow body portion opposite the top portion, said bottom portion configured to allow the beverage to pass through,
vi) connecting a multilayer sealing film in a sealable manner to the bottom portion of the cartridge so as to result in a sealed cartridge.

In a less preferred third method all portions and/or parts of the cartridge are provided as separate parts, followed by connecting either the top portion to the hollow body portion or the bottom portion to the hollow body portion after which the steps of the first and second method as disclosed herein can be carried out to complete the manufacture of the cartridge.

The present invention further extends to a method for making a beverage comprising providing a cartridge according to the invention (for the avoidance of doubt including the multilayer sealing film), followed by rupturing the weakened section by means of a needle, followed by injecting liquid into the hollow body portion of the cartridge and building up pressure until the multilayer sealing film ruptures, followed by collecting the beverage.

The invention will now be further explained on the basis of the following figures and examples, which should not be considered as limiting the present invention in any way.

Figure 1 schematically shows a cartridge according to the invention

Figures 2a, 2b and 2c schematically show a working principle of the cartridge

Figure 3 schematically shows a part of the top portion of a cartridge according to the invention

Figure 4 schematically shows possible cross sectional shapes of the cartridge of the present invention.

Figures 5a - 5c schematically show possible designs of the bottom portion of the cartridge of the invention.

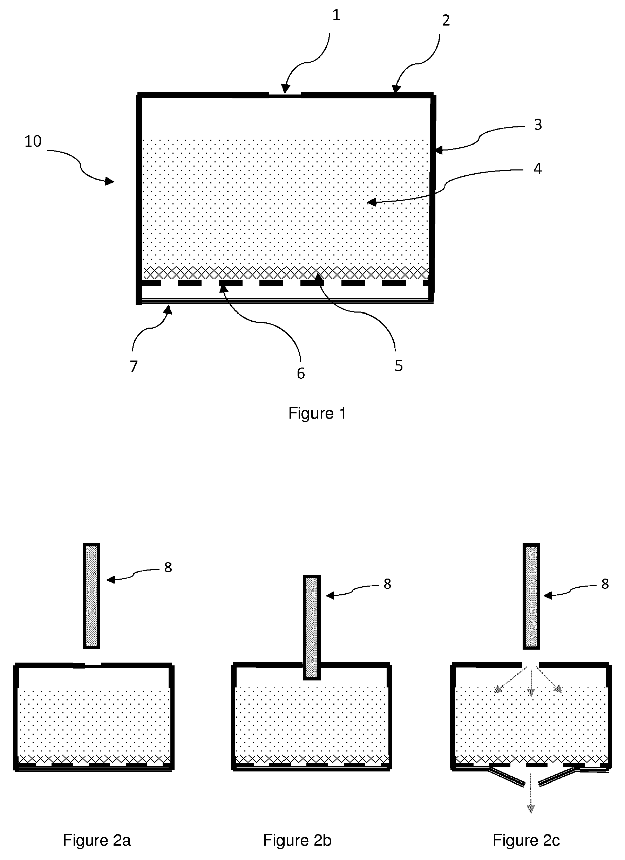

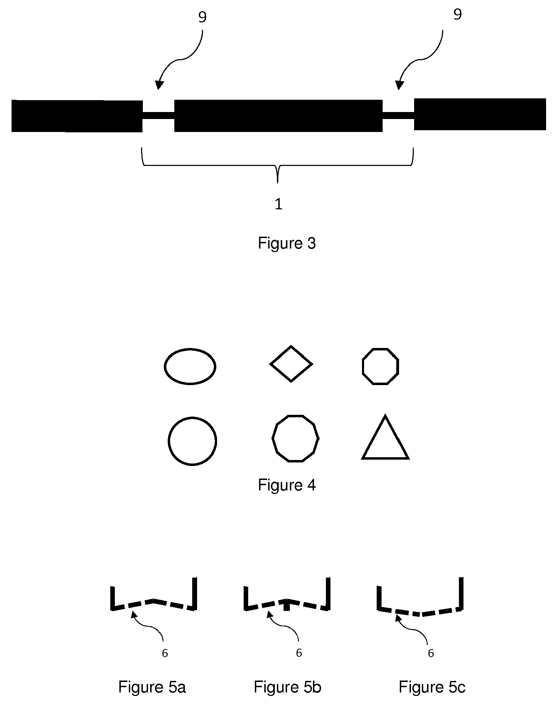

Figure 1 shows a cartridge 10 having a top portion 2 comprising a weakened section 1. Top portion 2 is preferably of circular shape, yet other shapes, like rectangular, oval or other shapes may also be considered. Figure 4 shows several non-limiting examples. It is desirable that the basic shape is maintained throughout the entire cross section of the cartridge. Thus, if top portion 2 is selected to have a circular shape than hollow body portion 3, bottom portion 6 and sealing film 7 likewise have a circular shape. The size of the shape, such as its diameter, may however vary over the height of the cartridge, but is preferably substantially constant.

Top portion 2 is connected in a sealable manner to hollow body portion 3. On the lower side in Figure 1, the hollow body portion is connected to bottom portion 6, which is configured to allow beverage to pass through. Bottom portion 6 is connected in a sealable manner with a multilayer sealing film 7 and covering said bottom portion. Based on the generic description as disclosed herein it is clear that the cartridge is sealed from the atmosphere surrounding it. On the inside of the cartridge a filter layer 5 is positioned between a beverage raw material 4 and bottom portion 6. The filter layer 5 prevents fine particles of the beverage raw material from passing through bottom portion 6.

An example of use of these kind of cartridges is schematically shown in Figures 2a - 2c. Figure 2a shows a needle 8 prior to puncturing top portion 2. Next, needle 8 punctures said top portion 2 at weakened section 1 so as to open the top portion. Hot water, or any other suitable liquid, is then be fed to the cartridge as schematically shown by the arrows in Figure 2c. The feeding of liquid is usually done under pressure so that the sealing film 7 ruptures allowing the beverage to flow out the cartridge from the bottom portion. The liquid feeding may be carried out by positioning a feeding device (not shown) on the top portion of the cartridge allowing the pressurised feed of liquid. Alternatively needle 8 may be configured to be a hollow needle allowing the injection of liquid in the cartridge. In such an embodiment needle 8, after having ruptured weakened section 1 is not extracted from the cartridge but is maintained in the position as shown in Figure 2b.

After injection or feeding, the liquid will extract or dissolve the beverage raw material such that a beverage is formed.

Instead of actively using a needle 8 to puncture top portion 2 it may also be possible to push top portion 2 of cartridge 10 against a needle fixed to a support. As long as the desired opening in the top portion is obtained and hot liquid can be fed under pressure to cartridge 10 either method is suitable. Mechanisms to inject liquid in beverage cartridges are known in the art.

With reference to Figures 2b and 2c, as more hot liquid is injected in the cartridge the beverage starts to pass through bottom portion 6 and will contact the inside surface of the multilayer sealing film 7. As schematically shown in Figure 2c sealing film 7 is configured such that it will rupture under a certain pressure allowing the beverage to exit from the cartridge after which it can be consumed. This technology is known per se and disclosed for example in US 6,849,285. Commercially available technology is for example marketed under the trade mark Nespresso.

Top portion 2 comprises a weakened section 1 which, as explained, allows needle 8 to puncture the top portion in a manner such that once punctured the inside of the cartridge is accessible for liquid. The dimensions and shapes of the weakened section can vary. In an embodiment the weakened section has a thickness that is less as compared to the remaining and surrounding part of top portion 2. Such embodiment is shown schematically in Figure 1. A disadvantage of this configuration however is that the weakened section as a whole is thinner and hence more susceptible to oxygen diffusion. A higher diffusion, for example of oxygen, is held undesirable as it may result in a loss of food quality. Accordingly, in a preferred embodiment the weakened section is configured as schematically shown in Figure 3 where weakened section 1 has a thickness similar to the thickness of the surrounding remaining part of top portion 2, yet also having on the outer periphery breakthrough section(s) 9. For cylindrical shaped weakened sections, which are preferred, breakthrough section 9 essentially is ring shaped. The thickness of weakened section 1 or of breakthrough section(s) 9 generally is from 10 to 80%, such as 30 - 60% of the thickness of the surrounding top portion 2. Breakthrough sections 9 may be continuous or discontinuous, but preferably continuous. Alternative solutions for weakened section 1 include but are not limited to sections made from a polypropylene composition which has a significantly lower modulus. Such embodiments are less preferred as these are more complex to manufacture. In an embodiment the ring-shaped breakthrough section 9 has a small portion of thicker thickness (not shown) so that weakened section 1 will not be physically separated from the cartridge after the puncture.

The shape of top portion 2 is preferably flat, i.e. disc-like. However top portion 2 may also have other shapes which are to be considered part of the invention as disclosed herein. Depending on the amount of beverage that is to be made the dimensions of the top portion 2 may differ. In general however the cartridges according to the present invention are used for only a single consumption portion. Accordingly the diameter (or in case of non-circular shapes, the smallest diameter of the circle around the non-circular shape) is generally from 20 to 75 mm, more preferably from 25 to 60mm or 35 to 55 mm. The thickness of top portion 2, apart from the weakened section 1 and/or breakthrough section 9, is preferably from 0.5 to 3mm, more preferably from 0.75 to 2mm. The oxygen permeability of top portion 2 is preferably at most 80, more preferably at most 60, even more preferably at most 40 $cc/m^2$.day as determined according to ASTM D3985 (23°C and 0%RH). Most preferred is an oxygen permeability of at most 35 or 30 $cc/m^2$.day.

Top portion 2 is connected to hollow body portion 3 in a sealable manner. Such can be done for example by welding or gluing, welding being preferred as then no other materials are introduced which is beneficial for recycling purposes. Alternatively hollow body portion 3 and top portion 2 are formed as a single piece in an injection moulding machine. As already mentioned above, the cross sectional shape of hollow body portion 3 is the same as the cross sectional shape of top portion 2. Preferably hollow body portion 3 is a round cylinder. The diameter (or in case of non-circular shapes, the smallest diameter of the circle around the non-circular shape) of hollow body portion 3 may be the same as the diameter of top portion 2. It is however preferred that the diameter is somewhat smaller as it allows more easy handling and/or processing of the cartridge in the device in which the beverage product is made. For example the diameter of hollow body portion 3 is from 1 - 10% or 2 - 5% smaller than the diameter of top portion 2. The wall thickness of hollow body portion 3 is similar to the wall thickness of top portion 2 and may be from 0.5 to 3mm, more preferably from 0.75 to 2mm.

The height of hollow body portion 3 depends inter alia on the amount of beverage raw material 4 to be contained in cartridge 10, but generally is from 10 to 70mm, such as from 15 to 50 mm or from 15 to 40 mm or from 20 to 35 mm.

The oxygen permeability of hollow body portion 3 is preferably at most 60, more preferably at most 50, even more preferably at most at most 40 $cc/m^2$.day as determined according to ASTM D3985 (23°C and 0%RH). Most preferred is an oxygen permeability of at most 35 or 30 $cc/m^2$.day.

Bottom portion 6 is connected to hollow body portion 3 opposite the side where top portion 2 is connected to hollow body portion 3. The connection can be made by welding. Alternatively hollow body portion 3 and top portion 2 are formed as a single piece in (for example) an injection moulding machine. Bottom portion 6 is configured to allow the beverage to pass through. Accordingly bottom portion 6 contains a plurality of holes as indicated schematically in Figure 1. The dimensions of the holes is selected such that it allows passage of the beverage on the one hand but also to allow a certain barrier to make sure that the desired extraction or solution of the beverage raw material is obtained. Accordingly the holes are dimensioned such that they have a diameter in the range of 0.05 to 3mm, preferably 0.1 to 2mm, more preferably 0.3 to 1.3mm. The total surface area of holes in bottom portion 6 is in the range from 5 to 30 %. The holes can be made in known manners, such as for example by perforation, or directly during an (injection) moulding. The bottom portion may have the shape of a flat disc or may be more complex and have a substantially convex or concave shape as per Figures 5a - 5c, or partially substantially convex or concave shape. The thickness of bottom portion 6 may be from 0.5 to 3mm, more preferably from 0.75 to 2mm.

Filter layer 5 is positioned between beverage raw material 4 and bottom portion 6 and its purpose is to prevent particulate insoluble beverage raw material to pass through bottom portion 6. This is in particular for the very fine particles, since the larger particles anyhow will not be able to pass through bottom portion 6.

Filter layer 5 is preferably a polypropylene non-woven material. Any type of polypropylene non-woven material is suitable as long as it will prevent particulate beverage raw material from passing through. Suitable non-limiting examples can be found in US 5,496,573. Filter layer 5 may be a single layer or a plurality of stacked layers of polypropylene non-woven material. A further filter layer may be position between the beverage raw material and top portion 2 if so desired.

Indeed it is preferred for the filter layer to be a polypropylene non-woven material. However other filter materials may also be considered. For example the use of regular filter paper or filter paper made from a paper product comprising a mixture of cellulose fibers and a thermoplastic polymer such as polyethylene. Such filter papers are nowadays commonly used in manufacture of coffee pouches.

Sealing film 7 is connected in a sealable manner to bottom portion 6 such that the cartridge is sealed from the atmosphere surrounding the cartridge. Sealing film 7 connects to bottom portion 6 at the outer periphery of the bottom portion 6, thereby allowing the process for making a beverage as described earlier and schematically shown in Figures 2a - 2c. This configuration also allows a certain gap between the bottom portion 6 and sealing film 7, as shown schematically in Figure 1. Sealing film 7 is a multilayer film comprising at least one polyolefin layer and a barrier layer. The barrier layer is required to obtain a desired low oxygen permeability of the sealing film. Accordingly the barrier layer may be selected from any material having such properties, such as ethylene vinyl alcohol copolymer, polyvinylidene chloride, polyethylene terephthalate, polyamide and polyvinyl alcohol layer. The barrier layer preferably has a thickness of from 2 - 20 $\mu$m, preferably from 2 - 10$\mu$m, more preferably from 2 - 5$\mu$m. A preferred barrier layer material is polyvinyl alcohol or ethylene vinyl alcohol copolymer.

The sealing film preferably has 3 or 5 layers arranged such that a polypropylene layer connects with bottom portion 6, the barrier layer is the, or one of the middle layers and the outer layer is preferably a polyethylene layer. The multilayer sealing film preferably has a thickness of from 20 - 200 $\mu$m, preferably from 20 -150 $\mu$m, more preferably from 20 - 50 $\mu$m. The oxygen permeability of the multilayer sealing film is at least similar or the same as the oxygen permeability of the portions of the polypropylene composition disclosed herein. In practice the sealing layer will have a lower oxygen permeability such as at most 30, more preferably at most 20, even more preferably at most at most 10 cc/m$^2$.day as determined according to ASTM D3985 (23°C an d 0%RH).

The mechanical properties of sealing film 7 are such that upon a critical pressure of beverage, while being prepared in accordance with the process as described with reference to Figures 2a- 2c, the film will rupture so that the beverage can exit the cartridge. It is preferred that the connection between sealing film 7 and bottom portion 6 remains intact, which is why it is preferred that the sealing film has 3 or 5 layers arranged such that a polypropylene layer connects with bottom portion 6. Films with the desired combination of mechanical properties and oxygen permeability are known to a skilled person.

The water vapour transmission rate (WVTR) of the cartridge of the invention is at most 0.1, more preferably at most 0.05 even more preferably at most 0.02 g/m$^2$.day as determined in accordance with ASTM FI249 at 38°C an d 100% relative humidity.

In view of obtaining a good shelf life for the cartridges it is preferred that the cartridge as a whole has an oxygen permeability of at most 60, more preferably at most 50, even more preferably at most at most 40 cc/m$^2$.day as determined according to ASTM D3985 (23°C and 0%RH). Most preferred is an oxygen permeability of at most 35 or 30 cc/m$^2$.day.50 cc/m$^2$.

The present inventors have prepared cartridges from the following compositions:

| | CE1 | E1 | E2 | E3 | E4 | E5 | CE2 |
|---|---|---|---|---|---|---|---|
| PP-1 [wt.%] | 98 | 78 | | | | 58 | 63 |
| PP-2 [wt.%] | | | 78 | 78 | 78 | | |
| Rubber | | | | | | | 15 |
| Talc-1 [wt.%] | | 20 | 20 | | | 40 | 20 |
| Talc-2 [wt.%] | | | | | 20 | | |
| Talc-3 [wt.%] | | | | 20 | | | |
| Additives [wt.%] | 2 | 2 | 2 | 2 | 2 | 2 | 2 |
| MFR [g/10min] (ISO 1133, 2.16kg, 230°C) | 42.7 | 36 | 32.5 | 25.6 | 26.8 | 31.7 | 25.7 |
| OTR* [cc/m$^2$.day] (ASTM D3985, 23°C and 0% RH) | 56 | 38 | 52 | 51 | 40 | 22 | 64 |
| Izod Impact [kJ/m$^2$] ISO 180/1 A 23°C | 2.4 | 2.8 | 5.2 | 5.6 | 5.2 | 2.3 | 5.7 |
| Flexural modulus [MPa] ISO 178 | 1550 | 3100 | 2700 | 2750 | 3050 | 5150 | 2050 |
| WVTR** [g/m$^2$.day] ASTM FI249 38°C/ 100% RH | ≤0.02 | ≤0.02 | ≤0.02 | ≤0.02 | ≤0.02 | ≤0.02 | ≤0.02 |
| * Oxygen Transmission Rate<br>** Water Vapour Transmission Rate | | | | | | | |

PP-1 is a propylene homopolymer having an MFR of 47g/10 min determined in accordance with ISO 1133 (230°C 2.16 kg).
PP-2 is a heterophasic propylene copolymer having an MFR of 33 g/10 min, a rubber content of approximately 18 wt.% on the basis of the weight of the polymer.

Rubber is Tafmer DF740 available from Mitsui Chemicals

Talc-1 is Steamic t1 DF available from Imerys.
Talc-2 is HAR T84 available from Imerys
Talc-3 is HTP Ultra 5c available from Imifabi Talc.

The additives comprised a colour masterbatch based on a propylene homopolymer and containing pigments and stabilisers.

From a comparison between CE1, E1 and E5 it can be observed that the OTR significantly reduces by adding talc to the polypropylene.
Based on a comparison between examples E2, E3 and E4 it may further be observed that use of high aspect ratio talc further reduces the OTR.
Based on a comparison between E1 and CE2 it can be observed that the use of an external modifier adversely affects, i.e. increases, the OTR of the polypropylene. Based on a comparison between E1 and E2 it can be observed that propylene homopolymers are preferred over heterophasic propylene copolymers in terms of the OTR.

**Claims**

1. Use of a polypropylene composition comprising

   - from 60 - 90 wt.% of polypropylene
   - from 10 - 40 wt.% of talc,
   - from 0 - 5 wt.% of optional additives,
   wherein the wt.% is based on the weight of the composition and the total of polypropylene, talc and optional additives is 100 wt.%,

   for the manufacture of a cartridge for making a beverage, preferably coffee.

2. The use of claim 1 wherein the polypropylene is a propylene homopolymer or a random copolymer of propylene and at most 5 wt.% of ethylene and/or alpha olefin having 4 to 10 carbon atoms based on the weight of the random copolymer.

3. The use of claim 1 or 2 wherein the polypropylene composition has one or more of the following properties:

   - melt flow rate of from 15 to 60 more preferably from 25 to 45 g/10min determined in accordance with ISO 1133 (2.16 kg, 230°C)
   - Flexural modulus of from 1500 to 3500 MPa determined in accordance with ISO 178
   - Izod notched impact strength of from 2 - 7 kJ/m2 determined in accordance with ISO 180/1A)

4. The use of any one or more of claims 1 - 3 wherein the composition comprises from 70 - 90 wt.% polypropylene and from 10 - 30 wt.% of talc.

5. The use of any one or more of claims 1 - 4 wherein the composition has an oxygen gas transmission rate permeability as determined in accordance with ASTM D3985 (23°C and 0%RH) of at most 60 cc.mm/m$^2$.day.

6. A cartridge for making a beverage, comprising

   - a top portion comprising a weakened section for allowing a needle to puncture said top portion allowing injection of a fluid into said cartridge
   - a hollow body portion extending from said top portion to a bottom portion and containing a beverage raw material configured for producing the beverage upon contact with said fluid

- a filter layer positioned in the hollow body part between said beverage raw material and said bottom portion
- a bottom portion configured to allow the beverage to pass through
- a sealing film covering said bottom portion,

wherein
said top portion, said hollow body portion part and said bottom portion are made from a polypropylene composition comprising

- from 60 - 90 wt.% of polypropylene
- from 10 - 40 wt.% of talc
- from 0 - 5 wt.% of optional additives
wherein the wt.% is based on the weight of the composition and the total of polypropylene, talc and optional additives is 100 wt.%,

said filter layer is preferably made from polypropylene non-woven material,
said sealing film is a multilayer sealing film comprising at least one polyolefin layer.

7. The cartridge of claim 6 wherein the polypropylene is a propylene homopolymer or a random copolymer of propylene and at most 5 wt.% of ethylene and/or alpha olefin having 4 to 10 carbon atoms based on the weight of the random copolymer.

8. The cartridge of claim 6 or 7 wherein the multilayer sealing film has a thickness of from 20 - 200 $\mu$m, preferably from 20 - 150 $\mu$, more preferably from 20 - 50 $\mu$m.

9. The cartridge of any one or more of claims 6 - 8 wherein the multilayer sealing film further comprises a barrier layer selected from an ethylene vinyl alcohol copolymer layer, a polyvinylidene chloride layer, a polyethylene terephthalate layer, a polyamide layer and a polyvinyl alcohol layer, said barrier layer preferably having a thickness of from 2 - 20 $\mu$m, preferably from 2 - 10$\mu$m, more preferably from 2 - 5$\mu$m.

10. The cartridge of any one or more of claims 6 - 9 having an oxygen gas transmission rate permeability as determined in accordance with ASTM D3985 (23°C and 0%RH) of at most 45 cc.mm/m$^2$.day.

11. The cartridge of any one or more of claims 6 - 10 wherein the polypropylene composition has one or more of the following properties:

- melt flow rate of from 15 to 60 more preferably from 25 to 45 g/10min determined in accordance with ISO 1133 (2.16 kg, 230°C)
- Flexural modulus of from 1500 to 3500 MPa determined in accordance with ISO 178
- Izod notched impact strength of from 2 - 7 kJ/m2 determined in accordance with ISO 180/1A)

12. The cartridge of any one or more of claims 6 - 11 further comprising a second filter layer positioned between said beverage raw material and said top portion, said second filter layer preferably made from polypropylene non-woven material.

13. A kit of parts for the manufacture of a cartridge according to any one or more of claims 6 - 12, comprising a hollow body portion for containing a beverage raw material, said hollow body portion extending from a bottom portion configured to allow beverage to pass through, and a top portion configured for connecting with the hollow body portion opposite the bottom portion, said top portion comprising a weakened section for allowing a needle to puncture said top portion at said weakened section for allowing injection of a fluid into said cartridge
or
a hollow body portion for containing a beverage raw material, said hollow body portion extending from a top portion comprising a weakened section for allowing a needle to puncture said top portion at said weakened section allowing injection of a fluid into said cartridge, and a bottom portion configured for connecting with the hollow body portion opposite the top portion, said bottom portion configured to allow beverage to pass through,
and
a filter layer of a filter material configured to be positioned between the beverage raw material and the bottom portion in the cartridge,
wherein said hollow body portion, said top portion and said bottom portion are made from a polypropylene composition comprising

- from 60 - 90 wt.% of polypropylene
- from 10 - 40 wt.% of talc
- from 0 - 5 wt.% of optional additives

wherein the wt.% is based on the weight of the composition and the total of polypropylene, mineral filler and optional additives is 100 wt.%.

14. A method for the manufacture of a cartridge according to any one ore more of claims 6 - 12 comprising the steps of:

i) providing a hollow body portion for containing a beverage raw material for producing a beverage upon contact with a fluid, said hollow body portion extending from a bottom portion configured to allow the beverage to pass through,

ii) providing a filter layer in the hollow body portion,

iii) filling the hollow body portion at least in part with beverage raw material, said beverage raw material being in contact with the filter layer,

iv) connecting in a sealable manner a top portion with the hollow body portion opposite the bottom portion, said top portion comprising a weakened section for allowing a needle to puncture said top portion at said weakened section allowing injection of a fluid into said cartridge,

v) connecting a multilayer sealing film in a sealable manner to the bottom portion of the cartridge.

15. A method for the manufacture of a sealed cartridge according to any one ore more of claims 6 - 12 comprising the steps of:

i) providing a hollow body portion for containing a beverage raw material configured for producing a beverage upon contact with a fluid, said hollow body portion extending from a top portion comprising a weakened section allowing a needle to puncture said top portion at said weakened section allowing injection of a fluid into said cartridge

ii) filling the hollow body portion at least in part with beverage raw material,

iii) providing a filter layer in the hollow body portion said filter layer being in contact with said beverage raw material,

iv) connecting in a sealable manner a bottom portion with the hollow body portion opposite the top portion, said bottom portion configured to allow the beverage to pass through,

vi) connecting a multilayer sealing film in a sealable manner to the bottom portion of the cartridge so as to result in a sealed cartridge.

Figure 1

Figure 2a          Figure 2b          Figure 2c

EP 3 173 438 A1

Figure 3

Figure 4

Figure 5a          Figure 5b          Figure 5c

Europäisches
Patentamt

European
Patent Office

Office européen
des brevets

# EUROPEAN SEARCH REPORT

Application Number

EP 15 19 6995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/308406 A1 (O'BRIEN PATRICK L [US] ET AL) 16 October 2014 (2014-10-16) * page 4 * | 1-15 | INV. C08K3/34 C08L23/12 A47J31/44 |
| A | WO 2010/034515 A1 (BOREALIS AG [AT]; GAHLEITNER MARKUS [AT]; JOHANSEN GEIR MORTEN [NO]; O) 1 April 2010 (2010-04-01) * the whole document * | 1-15 | |
| A | JP 2003 235733 A (KASHIWAGI MOLD KK) 26 August 2003 (2003-08-26) * the whole document * | 1-15 | |
| A | EP 0 445 865 A2 (SHELL INT RESEARCH [NL]) 11 September 1991 (1991-09-11) * the whole document * | 1-15 | |

TECHNICAL FIELDS
SEARCHED      (IPC)

C08K
C08L
A47J

The present search report has been drawn up for all claims

| Place of search | Date of completion of the search | Examiner |
|---|---|---|
| Munich | 15 April 2016 | Ritter, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 6995

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2016

| Patent document cited in search report | | Publication date | Patent family member(s) | | Publication date |
|---|---|---|---|---|---|
| US 2014308406 | A1 | 16-10-2014 | CN | 105121306 A | 02-12-2015 |
| | | | EP | 2984003 A2 | 17-02-2016 |
| | | | US | 2014308406 A1 | 16-10-2014 |
| | | | WO | 2014168940 A2 | 16-10-2014 |
| WO 2010034515 | A1 | 01-04-2010 | CN | 102164738 A | 24-08-2011 |
| | | | EP | 2331321 A1 | 15-06-2011 |
| | | | ES | 2400994 T3 | 16-04-2013 |
| | | | WO | 2010034515 A1 | 01-04-2010 |
| JP 2003235733 | A | 26-08-2003 | JP | 3962861 B2 | 22-08-2007 |
| | | | JP | 2003235733 A | 26-08-2003 |
| EP 0445865 | A2 | 11-09-1991 | AT | 180810 T | 15-06-1999 |
| | | | AU | 636718 B2 | 06-05-1993 |
| | | | AU | 7208891 A | 05-09-1991 |
| | | | BR | 9100834 A | 05-11-1991 |
| | | | CA | 2037497 A1 | 06-09-1991 |
| | | | CN | 1054604 A | 18-09-1991 |
| | | | CS | 9100569 A3 | 15-01-1992 |
| | | | DE | 69131283 D1 | 08-07-1999 |
| | | | DE | 69131283 T2 | 04-11-1999 |
| | | | EP | 0445865 A2 | 11-09-1991 |
| | | | FI | 911094 A | 06-09-1991 |
| | | | JP | 3031492 B2 | 10-04-2000 |
| | | | JP | H04255352 A | 10-09-1992 |
| | | | NO | 910852 A | 06-09-1991 |
| | | | PL | 289289 A1 | 04-11-1991 |
| | | | PT | 96919 A | 31-12-1991 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6849285 B

- US 5496573 A